# EUROPEAN PATENT APPLICATION

(11) **EP 2 106 047 A2**
(43) Date of publication of application: **30.09.2009**
(21) Application number: 09155408.9
(22) Date of filing: 17.03.2009
(51) Int. Cl.: H04H 60/00

(54) **Digital broadcast service method and system**

(30) Priority: 27.03.2008 KR 20080028607
(71) Applicant: Samsung Electronics Co., Ltd., Suwon-si, Gyeonggi-do (KR)
(72) Inventor: Kang, Ki Seok, Suwon-si Gyeonggi-do (KR)
(74) Representative: Harrison Goddard Foote

(57) **Abstract**

A method and system for providing digital broadcast services are disclosed. The digital broadcast service method, using a service server and user terminal, includes establishing connections between a user terminal and a service server through a wireless network and a broadcast distribution system, performing, by the user terminal, service registration through the wireless network, purchasing, by the user terminal, a broadcast service from the service server through the wireless network, transmitting, by the user terminal, an authentication key request for the purchased broadcast service through the wireless network, and releasing the connection made through the wireless network after one of the performing of the service registration, the purchasing of the service, or the transmitting of the authentication key request.

## Description

### BACKGROUND OF THE INVENTION

### 1. Field of the Invention:

The present invention relates to digital broadcast services. More particularly, the present invention relates to a digital broadcast service method and system in a digital broadcast system distributing broadcast services through a broadcast distribution system and a wireless network to establish and release a connection to the wireless network.

### 2. Description of the Related Art:

With recent advances in communication and broadcasting technologies, various attempts have been made to provide broadcast services through a broadcast distribution system or mobile communication network to mobile terminals. Also, attempts have been made to deliver packet data services as well as conventional audio visual broadcast services through broadcast channels. These types of services are termed mobile broadcast services and are provided by systems termed mobile broadcast systems. More particularly, the Open Mobile Alliance (OMA), a standards body for interoperability between individual mobile solutions, develops international standards for applications related to mobile games and Internet services. In the OMA, a Mobile Broadcast Services (BCAST) sub working group of a Browser and Content (BAC) working group has developed technologies for providing broadcast services using mobile terminals.

In the mobile broadcast system proposed by the OMA, a mobile broadcast service can be provided through discovering a desired broadcast service by a mobile terminal, registering the service by the mobile terminal, providing control information necessary for receiving the service, transmitting the service and receiving the service by the mobile terminal.

For a mobile terminal to receive a digital broadcast service, it is necessary to perform a series of steps for service request, purchase, authentication and actual service reception, which are carried out through a wireless network. Actual service reception (reception of a digital broadcast) is performed through a broadcast distribution system. However, the time required for service reception is very long, whereas the time required for service request, purchase and authentication is short. Nevertheless, in an existing digital broadcast service system, the connection to the wireless network is continuously maintained even after the service request, the purchase and the authentication. Accordingly, resource usage related to the maintained wireless connection will have to be paid.

Therefore, a need exists for a system and method for a digital broadcast service method and system that releases and reestablishes a wireless connection during a broadcast service reception.

### SUMMARY OF THE INVENTION

An aspect of the present invention is to address at least the above-mentioned problems and/or disadvantages and to provide at least the advantages described below. Accordingly, an aspect of the present invention is to provide a digital broadcast service method and system that enable a user terminal to release and reestablish a wireless network connection as necessary during broadcast service reception.

In accordance with an aspect of the present invention, a digital broadcast service method using a user terminal and a service server is provided. The method includes establishing connections between a user terminal and a service server through a wireless network and a broadcast distribution system, performing, by the user terminal, service registration through the wireless network, purchasing, by the user terminal, a broadcast service from the service server through the wireless network, transmitting, by the user terminal, an authentication key request for the purchased broadcast service through the wireless network, and releasing the connection made through the wireless network after the performing of the service registration, the purchasing of the service, or the transmitting of the authentication key request.

The connection made through the wireless network may be released based on a trigger message indicating wireless connection release transmitted by the service server to the user terminal.

Alternatively, the connection made through the wireless network may be released when a preset waiting time expires after the performing of the service registration, the purchasing of the service, or the transmitting of the authentication key request.

The waiting time may be included in service guide information transmitted by the service server through the broadcast distribution system to the user terminal.

Alternatively, the connection made through the wireless network may be released when the user terminal transmits a message indicating wireless connection release to the service server after the performing of the service registration, the purchasing of the service, or the transmitting of the authentication key request.

The digital broadcast service method may further include transmitting, after releasing the connection made through the wireless network, by the service server, a trigger message indicating wireless connection reestablishment, and establishing, by the user terminal, a connection to the service server through the wireless network according to the trigger message.

In accordance with another aspect of the present invention, a digital broadcast service system is provided. The system includes a service server for connecting through a wireless network and a broadcast distribution system to a user terminal, and the user terminal for performing service registration, for purchasing a service, or for transmitting an authentication key request through the wireless network while maintaining the connection made through the broadcast distribution system to the service server, and for releasing the connection made through the wireless network after the performing of the service registration, the purchasing of the service, or the transmitting of the authentication key request.

The service server may transmit a trigger message indicating wireless connection release to the user terminal.

The user terminal may release the connection made through the wireless network when a preset waiting time expires after the performing of the service registration, the purchasing of the service, or the transmitting of the authentication key request. The waiting time may be included in service guide information transmitted by the service server through the broadcast distribution system to the user terminal or in a message transmitted by the service server to the user terminal.

The user terminal may transmit a message indicating wireless connection release to the service server and then release the connection made through the wireless network, after the performing of the service registration, the purchasing of the service, or the transmitting of the authentication key request.

The service server may transmit, after the connection made through the wireless network is released, a trigger message indicating wireless connection reestablishment. Then, the user terminal may establish a connection to the service server through the wireless network according to the trigger message.

In the present invention, the digital broadcast service method enables the user terminal to release or reestablish a wireless network connection as necessary and contributes to saving radio resources.

Other aspects, advantages and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will be more apparent from the following description in conjunction with the accompanying drawings, in which:

FIGs. 1A and 1 B are block diagrams illustrating a digital broadcast service system according to an exemplary embodiment of the present invention;

FIGs. 2A and 2B are sequence diagrams illustrating a scheme of releasing a wireless network connection in a digital broadcast service method according to an exemplary embodiment of the present invention;

FIGs. 3A to 3C are sequence diagrams illustrating a scheme of releasing a wireless network connection in the digital broadcast service method according to an exemplary embodiment of the present invention;

FIGs. 4A to 4C are sequence diagrams illustrating a scheme of releasing a wireless network connection in the digital broadcast service method according to an exemplary embodiment of the present invention; and

FIGs. 5A and 5B are sequence diagrams illustrating a scheme of reestablishing a wireless network connection in the digital broadcast service method according to an exemplary embodiment of the present invention.

Throughout the drawings, it should be noted that like reference numbers are used to depict the same or similar elements, features and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions are omitted for clarity and conciseness.

The terms and words used in the following description and claims are not be limited to the bibliographical meaning, but are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

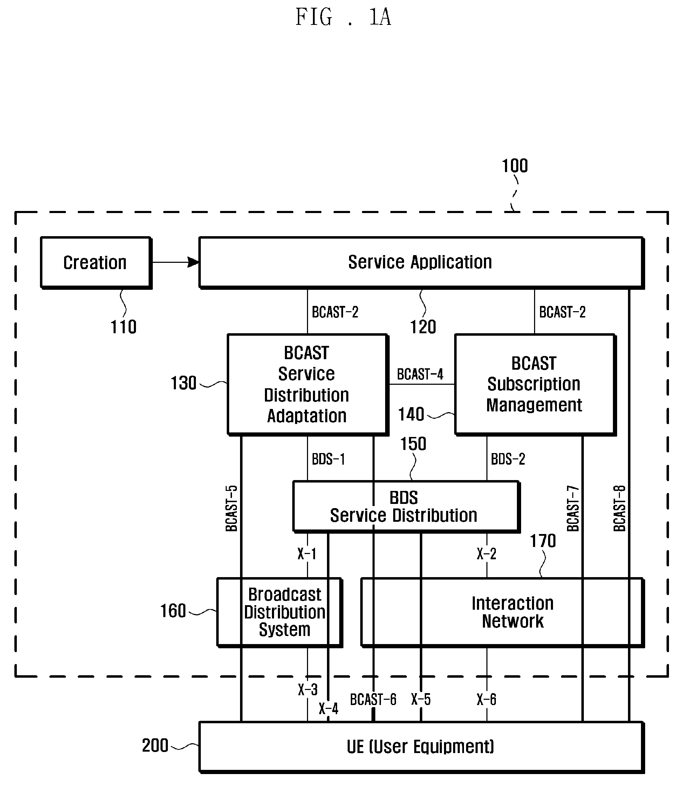

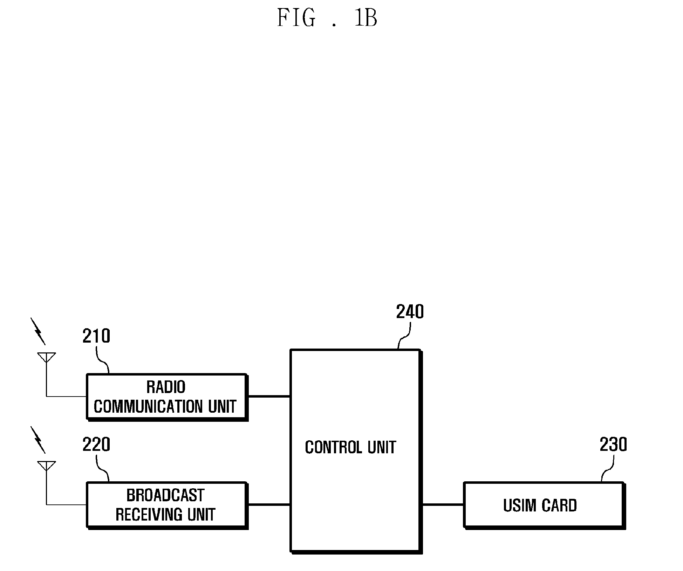

FIGs. 1A and 1 B are block diagrams illustrating a digital broadcast service system according to an exemplary embodiment of the present invention.

Referring to FIG. 1A, the digital broadcast service system includes a service server 100 and a user terminal 200 (user equipment). The service server 100 and the user terminal 200 may be connected together through a wireless network and a broadcast distribution system to provide value-added interactive services as well as broadcast services. That is, between the service server 100 and the user terminal 200, interactive operations related to service registration, authentication and billing are performed through the broadcast distribution system. Actual broadcasts (contents) are distributed through the broadcast distribution system.

The service server 100 includes functional entities such as Content Creation 110, Broadcast Services (BCAST) Service Application 120, BCAST Service Distribution/Adaptation 130, BCAST Subscription Management 140, Broadcast Distribution System (BDS) Service Distribution 150, broadcast distribution system 160 and Interaction Network 170.

The Content Creation 110 is a source of content to be broadcast. Broadcast content may be related to stream distribution or file distribution. For example, an audio visual broadcast or an interactive broadcast requested by a user may be provided as a stream distribution service and an advertisement, game or video clip may be provided as a file distribution service.

The BCAST Service Application 120 is an object that processes content from the Content Creation 110 in the OMA BCAST format. The BCAST Service Application 120 manages protected content and media encoding, interaction requests from the user terminal 200 and service elements related to the BCAST Service Distribution/Adaptation 130 and the BCAST Subscription Management 140. The BCAST Service Application 120 manages Right Objects (RO) enabling encryption-protected contents to be decrypted for playback, and supports content encoding.

The BCAST Service Distribution/Adaptation 130 distributes a service received from the BCAST Service Application 120. Before distribution, the BCAST Service Distribution/Adaptation 130 adapts a service in a bearer specific format and collects service guide sources into a complete service guide, such as an Electronic Service Guide (ESG), for distribution. In an exemplary implementation, the ESG includes a waiting time usage indicator and a waiting time.

The BCAST Subscription Management 140 performs overall management of service subscribers and manages subscription and preference information of users. The BCAST Subscription Management 140 relates to a "BCAST Service Provisioning Function" for interaction with users.

The BDS Service Distribution 150 adapts data to be distributed in a bearer specific format.

The Broadcast Network 160 supports communications and transmits actual broadcasts (contents).

The Interaction Network 170, as a wireless network, supports one-to-one communication with a particular user terminal using technologies such as 3^{rd} Generation Partnership Project (3GPP) Multimedia Broadcast/Multicast Service MBMS and 3GPP2 Broadcast and Multicast Service (BCMCS).

The user terminal 200 communicates with the service server 100 through a broadcast distribution system and a wireless network. The user terminal 200 may receive a high-speed unidirectional service related to actual broadcasts through the broadcast distribution system and may receive an interactive service related to service subscription, content purchase, service joining and billing through the wireless network.

Referring to FIG. 1B, the user terminal 200 includes a radio communication unit 210, broadcast receiving unit 220, a Universal Subscriber Identity Module (USIM) card 230 and a control unit 240.

The radio communication unit 210 communicates with the service server 100 through a wireless network. That is, the radio communication unit 210 performs wireless communication through a wireless network supported by the service server 100, such as an MBMS or BCMCS network. Under the control of the control unit 240, the radio communication unit 210 establishes a tunnel to the service server 100 and performs operations related to service registration, service request and authentication key request (MBMS service key) through the tunnel. The radio communication unit 210 may release the tunnel and reestablish a tunnel under the control of the control unit 240.

The broadcast receiving unit 220 receives broadcasts from the service server 100 through a broadcast distribution system. The broadcast receiving unit 220 receives a digital broadcast according to a standard protocol, such as Digital Video Broadcasting - Handheld (DVB-H). In the case of DVB-H, broadcast signals may be transmitted in time-sliced bursts and a selected one of received signals is transmitted to the control unit 240.

The USIM card 230 functions as an integrated circuit card and may include a storage, such as a Random Access Memory (RAM) or Read Only Memory (ROM) and a processor. The USIM card 230 may be a removable device. The USIM card 230 may be a Universal Integrated Circuit Card (UICC). The USIM card 230 is used for authentication and security.

The control unit 240 extracts service guide information from a received broadcast signal, and finds a waiting time usage indicator and a waiting time from the service guide information. If the waiting time usage indicator is set, the control unit 240 controls the radio communication unit 210 to release the tunnel after expiration of the waiting time.

In digital broadcasting, a physical channel accommodates a plurality of service channels. The physical channel is associated with a particular frequency selectable by the tuner and a service channel is associated with a broadcast program or a broadcasting station. Service channels in a Digital Multimedia Broadcasting (DMB) and a Digital Video Broadcasting - Terrestrial (DVB-T) may be identified by Program Identifiers (PID). Service channels in DVB-H may be identified by a combination of PID, an Internet Protocol (IP) address and port information. The control unit 240 selects a desired service channel from a received broadcast signal and plays back a broadcast on the selected service channel.

The control unit 240 receives an authentication key associated with a purchased broadcast, decrypts the purchased broadcast using the received authentication key and reproduces the decrypted broadcast. The control unit 240 controls the radio communication unit 210 to perform operations related to service authentication, service request, authentication key request and service deregistration in cooperation with the service server 100.

The user terminal 200 may further include an input unit (not illustrated) for receiving an input, a display unit (not illustrated) and an audio output unit (not illustrated) for reproducing a digital broadcast.

As described above, the user terminal 200 may receive unidirectional services through a broadcast distribution system and further receive bidirectional services through a wireless network.

More particularly, to receive a bidirectional service, the user terminal 200 has to establish a tunnel to the service server 100. For example, the tunnel may be established using a Packet Data Protocol (PDP) context.

After activating a PDP context for a wireless network connection, the user terminal 200 may perform four interactive operations related to broadcast service reception through the wireless network connection. The four interactive operations include service registration in which a user terminal registers itself in the service server in relation to broadcast service reception, purchase requesting in which a user terminal makes a request for purchasing a desired broadcast service, authentication key requesting (for example, MBMS service key) in which a user terminal makes a request for an authentication key matched with a particular broadcast service, and service deregistration in which a user terminal deregisters itself from the service server.

In existing broadcast service systems, a wireless network connection and broadcast distribution system connection are continuously maintained from service registration to service deregistration. The present invention prevents a waste of radio resources due to maintenance of the wireless network connection and provides a scheme for saving radio resources that enables releasing of the wireless network connection whenever necessary from service registration to service deregistration.

A wireless network connection between the service server 100 and the user terminal 200 is established through a tunnel. In an exemplary implementation, the tunnel is formed using a PDP context. However, the present invention is not limited thereto. A handshaking procedure for terminal authentication, registration and encryption to be performed for the first tunnel establishment is not the subject matter of the present invention. Therefore, a description thereof is omitted. In the description, establishment and release of a wireless network connection are used interchangeably with establishment and release of a tunnel, respectively.

A scheme for deactivating an existing PDP context as necessary during the period from service registration to service deregistration, and for reactivating the PDP context after deactivation is described below.

Tunnel releasing may be performed using a waiting time or an acknowledgement message. Tunnel releasing and reestablishment may be performed through transmission of a trigger message by the service server. A trigger message is transmitted using a Multimedia Internet KEYing (MIKEY) message and a portion of a solicited pull procedure (refer to 3GPP TS 33.246).

Tunnel releasing and reestablishment may be achieved by using a waiting time, an acknowledgment message, through transmission of a trigger message by the service server or a combination thereof. Use of a waiting time, use of an Acknowledgement (ACK) message and use of a trigger message will be described below.

### Use of waiting time

The service server 100 transmits a preset waiting time to the user terminal 200. After transmitting a particular message to the service server 100, the user terminal 200 awaits a message or data from the user terminal 200 for the waiting time. If no message or data is received from the user terminal 200 during the waiting time, the service server 100 releases a connection to the wireless network (releases the tunnel). For setting the waiting time, the service server 100 may transmit an ESG including a waiting time, or the service server 100 may transmit a particular message including a waiting time usage indicator and a waiting time. For example, for registration, the user terminal 200 transmits a registration request message to the service server 100. The service server 100 transmits an authentication success message to the user terminal 200 as a reply to the registration request message. Here, the service server 100 may transmit an authentication success message including a waiting time usage indicator and a waiting time.

### Use of acknowledgement message

The service server 100 uses a MIKEY message to transmit an authentication key (MBMS Service Key: MSK) to the user terminal 200. After reception of the MIKEY message, the user terminal 200 transmits an acknowledgement message associated with a particular broadcast service. Here, the user terminal 200 transmits an acknowledgement message including a tunnel release intention and then releases the tunnel to the service server 100.

### Use of trigger message

The service server 100 may use a trigger message enabling the user terminal 200 to establish or release a tunnel to the service server 100. The format of trigger messages conforms to MIKEY messages described in 3GPP TS 33.246, and a trigger message may be transferred in a scheme based on a wireless bearer. For example, the service server 100 may transmit a trigger message to a user terminal through a Short Message Service (SMS). A MIKEY message is used to transmit an MSK. The MSK may be identified by a Key Domain ID and an MSK ID. The MSK ID is 4 bytes long, in which two bytes are for a Key Group portion and another two bytes are for a Key Number portion. The Key Group portion is used to group keys together for effective management and the Key Number portion is used to distinguish MSKs that have the same Key Domain ID and Key Group portion. A MIKEY message includes a header and a KEMAC field as a payload. The header includes a V-bit, and the KEMAC field may include an encrypted sub-payload and a Message Authentication Code (MAC).

A trigger message is created using Table 1 for releasing and reestablishing a service connection.

**[Table 1]**

| Trigger message | Key Group part | Key Number part | KEMAC Encr Data Len | V-bit in HDR |
|---|---|---|---|---|
| Release | Preset value (group ID) | not used | not used | not set |
| Connect to one service | preset value (group ID) | 0 | 0 | not set |
| Connect to multiple services | 0 | 0 | 0 | not set |

As illustrated in Table 1, trigger messages are used to release or reestablish a service connection.

In the header of a MIKEY message, the V-bit is normally set to '1'. For distinguishing a MIKEY message from a trigger message, the V-bit of the trigger message is preferably set to a value other than '1'. That is, the trigger message may be transmitted without setting the V-bit.

A trigger message for connection release has a preset value in the Key Group portion of the MSK ID. The preset value may be an MSK group identifier indicating a broadcast service to be released or an MSK group identifier indicating a current broadcast service.

For example, the preset value in the Key Group portion of the MSK ID may be "Oxffff". As described above, the service server 100 may transmit a trigger message having a preset value in the Key Group portion of the MSK ID to the user terminal 200 to permit the user terminal 200 to release the service connection.

A trigger message for tunnel reestablishment may be used for resumption of a broadcast service or for connecting multiple broadcast services. In a trigger message for tunnel reestablishment, the Encr Data Len field (the length of encrypted data) of KEMAC is set to '0'.

A trigger message indicating resumption of a broadcast service has a preset value in the Key Group portion of the MSK ID. The preset value may be an MSK group identifier indicating a broadcast service to be disconnected or the currently connected broadcast service.

In a trigger message indicating all broadcast services currently purchased by a user or an interactive service other than a broadcast service, both the Key Group portion and the Key Number portion are set to '0'.

Upon reception of a trigger message, the user terminal 200 releases or reestablishes the tunnel depending on the settings of the trigger message.

An exemplary procedure for releasing the wireless network connection is described below. In an exemplary embodiment of the present invention, after the service registration, the service purchase and the authentication key request are made, the wireless network connection may be released using a waiting time, an acknowledgement message or a trigger message.

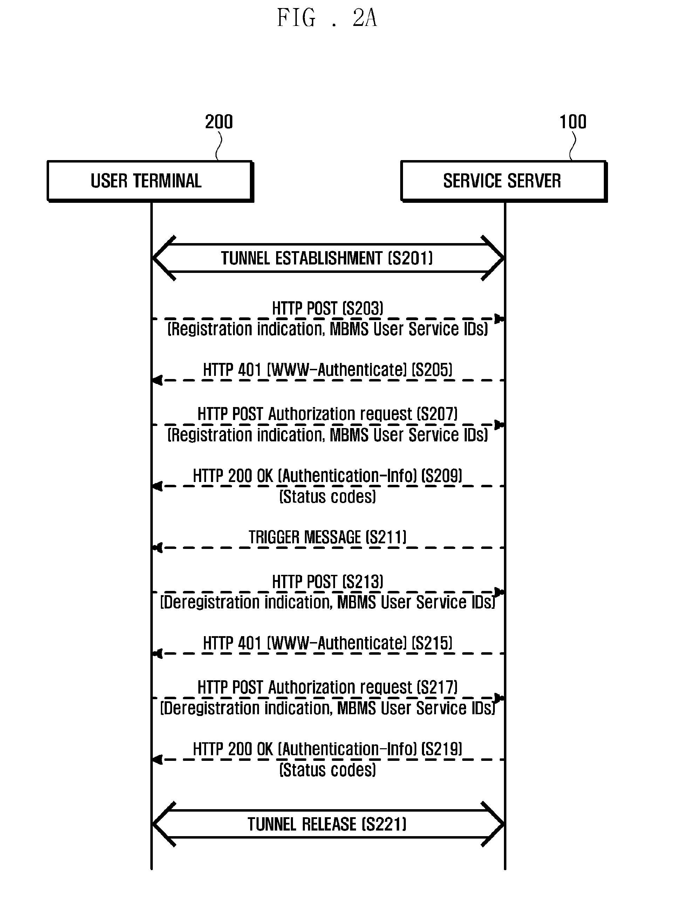

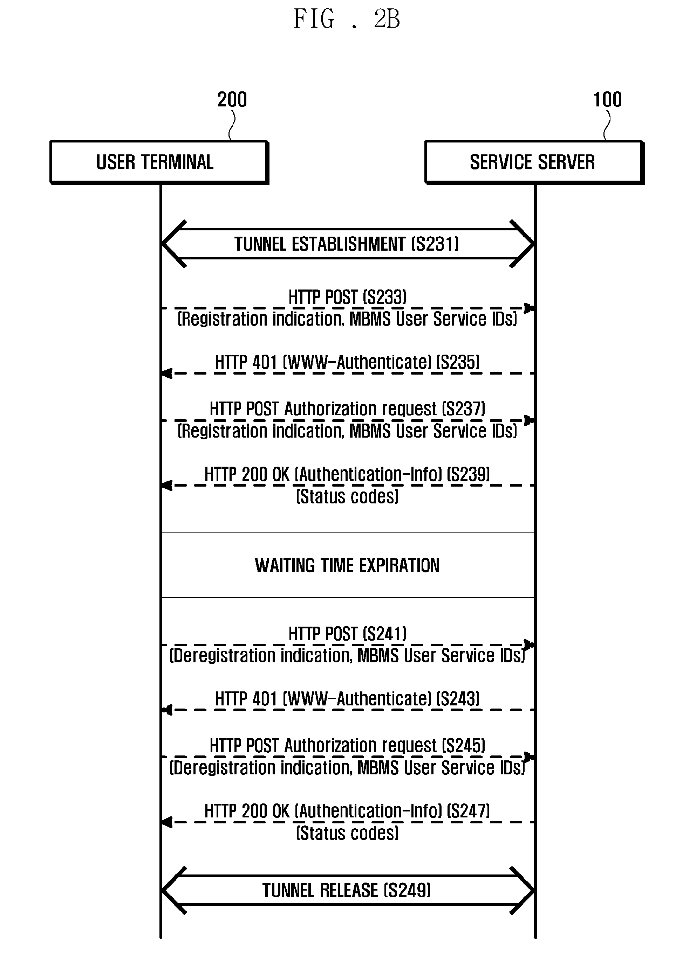

FIGs. 2A and 2B are sequence diagrams illustrating an exemplary scheme for releasing the wireless network connection. In FIGs. 2A and 2B, the user terminal 200 releases the wireless network connection after service registration.

Referring to FIG. 2A, the service server 100 and user terminal 200 are connected together through a wireless network connection by establishing a tunnel in step S201. The tunnel may be established through PDP activation.

For registration of a broadcast service, the user terminal 200 transmits a registration request message to the service server 100 in step S203. The registration request message uses an HTTP POST message. That is, the user terminal 200 transmits an HTTP POST message to the service server 100 in step S203. The registration request message includes a registration indication indicating service registration and MBMS User Service IDs to identifying desired services.

Upon reception of the registration request message, the service server 100 transmits a response message corresponding to the result of authentication of the registration request message. The authentication scheme is not the subject matter of the present invention. Therefore, a description thereof is omitted.

When the authentication fails, the service server 100 transmits an authentication fail message to the user terminal 200 in step S205. The authentication fail message utilizes an HTTP 401 response including a WWW-Authenticate header indicating an authentication failure.

Upon detection of the authentication failure (HTTP 401 response), the user terminal 200 transmits a registration re-request message to the service server 100 for a registration retry in step S207. The registration re-request message uses an HTTP POST Authorization request message. That is, the user terminal 200 transmits an HTTP POST Authorization request message to the service server 100 in step S207. The registration re-request message includes a registration indication and a service identifier.

Still referring to FIG. 2A, a failure message corresponding to a request message or a request message corresponding to a failure message may be unnecessary when failure does not occur, which is indicated in dotted lines in steps S205 and S207. In the following illustrations, no particular indication is given to steps that may be skipped.

When the authentication succeeds, the service server 100 transmits an authentication success message to the user terminal 200 in step S209. The authentication success message uses an HTTP 200 OK response including an Authentication-info header and status codes indicating statuses of the service identifiers previously transmitted.

By receiving the authentication success message, the user terminal 200 is ready to receive a broadcast service from the service server 100. At this time, it is assumed that no data is exchanged through the wireless network between the service server 100 and the user terminal 200. In an exemplary implementation, radio resources may be saved by releasing the tunnel, whereas existing schemes maintain the tunnel and occupy radio resources.

To release the tunnel, the service server 100 transmits a trigger message indicating tunnel release to the user terminal 200 in step S211. The trigger message may be transmitted through any wireless bearer, such as a short message service. As described above, the trigger message for tunnel release is a MIKEY message whose V-bit in the header is not set and the trigger message has a preset value in the Key Group part of the MSK ID.

Upon reception of the trigger message, the user terminal 200 transmits a deregistration request message to the service server 100 in step S213. The deregistration request message uses an HTTP POST message. That is, the user terminal 200 transmits an HTTP POST message to the service server 100 in step S213.

The deregistration request message includes a deregistration indication and MBMS User Service IDs. The deregistration indication indicates service deregistration and MBMS User Service IDs to identify broadcast services purchased by the user. The MBMS User Service IDs may identify multiple broadcast services to be deregistered.

Upon reception of the deregistration request message, the service server 100 transmits a response message corresponding to the result of deregistration.

When the deregistration fails, the service server 100 transmits an authentication fail message to the user terminal 200 in step S215. The authentication fail message utilizes an HTTP 401 response including a WWW-Authenticate header indicating an authentication failure.

Upon detection of deregistration failure (HTTP 401 response), the user terminal 200 transmits a deregistration re-request message to the service server 100 for a deregistration retry in step S217. The deregistration re-request message uses an HTTP POST Authorization request message. That is, the user terminal 200 transmits an HTTP POST Authorization request message to the service server 100 in step S217. The deregistration re-request message may include a deregistration indication and a service identifier.

When the deregistration succeeds, the service server 100 transmits a deregistration success message including status codes to the user terminal 200 in step S219. The deregistration success message uses an HTTP 200 OK response including an Authentication-info header. The status codes indicate statuses of the service identifiers previously transmitted.

After receiving the deregistration success message, the user terminal 200 releases the tunnel to the service server 100 in step S221. While tunnel releasing terminates the connection through Interaction Network 170 to BCAST Subscription Management 140 of the service server 100, the connection through the broadcast distribution system 160 to BCAST Service Distribution/Adaptation 130 is maintained. By releasing the tunnel, occupancy of the wireless network is freed and radio resources are saved.

An exemplary procedure for releasing the wireless network connection (tunnel) after a service registration is described below.

Referring to FIG. 2B, the service server 100 and the user terminal 200 are connected together through an established tunnel in step S231.

To receive a broadcast service from the service server 100, the user terminal 200 transmits a registration request message to the service server 100 in step S233. The registration request message uses an HTTP POST message and includes a registration indication and service identifiers (MBMS User Service IDs).

Upon reception of the registration request message, the service server 100 transmits a response message corresponding to the result of authentication of the registration request message. When the authentication fails, the service server 100 transmits an authentication fail message to the user terminal 200 in step S235. The authentication fail message utilizes an HTTP 401 response including a WWW-Authenticate header indicating an authentication failure.

Upon detection of the authentication failure, the user terminal 200 transmits a registration re-request message to the service server 100 for a registration retry in step S237. The registration re-request message uses an HTTP POST Authorization request message and includes a registration indication and service identifiers.

When the authentication succeeds, the service server 100 transmits an authentication success message including status codes to the user terminal 200 in step S239. The authentication success message uses an HTTP 200 OK response and includes an Authentication-info header.

After the registration, it is assumed that no data is exchanged through the wireless network between the service server 100 and the user terminal 200 for a preset waiting time. Here, the data exchange is independent of transmission through the broadcast distribution system. The service server 100 may notify the waiting time in step S239 or broadcast an ESG including the waiting time in advance.

After the waiting time expires, the user terminal 200 automatically releases the tunnel to thereby save radio resources. That is, after expiration of the waiting time, to release the tunnel, the user terminal 200 transmits a deregistration request message to the service server 100 in step S241. The deregistration request message uses an HTTP POST message. That is, the user terminal 200 transmits an HTTP POST message to the service server 100 in step S241.

The deregistration request message includes a deregistration indication and MBMS User Service IDs. The deregistration indication indicates service deregistration and MBMS User Service IDs to identify broadcast services purchased by the user. The MBMS User Service IDs may identify multiple broadcast services to be deregistered.

Upon reception of the deregistration request message, the service server 100 transmits a response message corresponding to the result of deregistration.

When the deregistration fails, the service server 100 transmits an authentication fail message to the user terminal 200 in step S243. The authentication fail message utilizes an HTTP 401 response including a WWW-Authenticate header indicating an authentication failure.

Upon detection of deregistration failure (HTTP 401 response), the user terminal 200 transmits a deregistration re-request message to the service server 100 for a deregistration retry in step S245. The deregistration re-request message uses an HTTP POST Authorization request message. That is, the user terminal 200 transmits an HTTP POST Authorization request message to the service server 100 in step S245. The deregistration re-request message may include a deregistration indication and a service identifier.

When the deregistration succeeds, the service server 100 transmits a deregistration success message including status codes to the user terminal 200 in step S247. The deregistration success message uses an HTTP 200 OK response including an Authentication-info header. The status codes indicate statuses of the service identifiers previously transmitted.

After receiving the deregistration success message, the user terminal 200 releases the tunnel to the service server 100 to save radio resources in step S249.

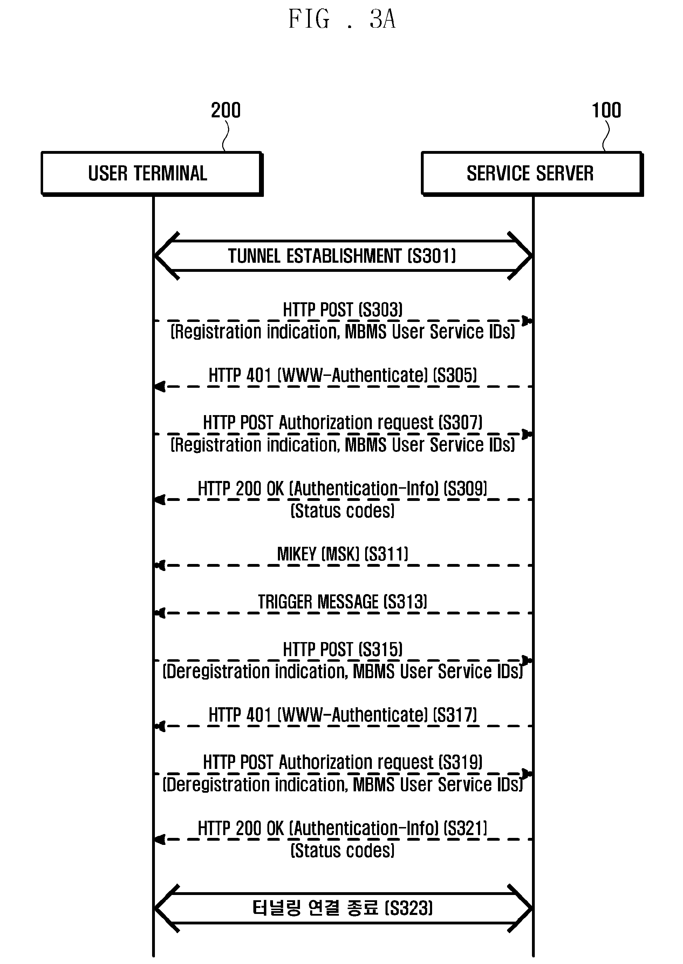

An exemplary procedure for releasing the tunnel after a service request is described below. FIGs. 3A to 3C are sequence diagrams illustrating an exemplary scheme for releasing a wireless network connection. In FIGs. 3A to 3C, the user terminal 200 releases the wireless network connection after purchasing a broadcast service.

Referring to FIG. 3A, the service server 100 and the user terminal 200 are connected together through an established tunnel in step S301. The tunnel may be established through PDP activation.

To receive a broadcast service from the service server 100, the user terminal 200 transmits a purchase request message to the service server 100 in step S303. The purchase request message uses an HTTP POST message. That is, the user terminal 200 transmits an HTTP POST message to the service server 100 in step S303. The purchase request message includes a registration indication and service identifiers (MBMS User Service IDs). The service identifiers identify broadcast services to be purchased. Multiple service identifiers may be transmitted.

Upon reception of the purchase request message, the service server 100 transmits a response message corresponding to the result of authentication of the purchase request message. When the authentication fails, the service server 100 transmits an authentication fail message to the user terminal 200 in step S305. The authentication fail message utilizes an HTTP 401 response including a WWW-Authenticate header indicating an authentication failure.

Upon detection of authentication failure (HTTP 401 response), the user terminal 200 transmits a purchase re-request message to the service server 100 for a purchase retry in step S307. The purchase re-request message uses an HTTP POST Authorization request message. That is, the user terminal 200 transmits an HTTP POST Authorization request message to the service server 100 in step S307. The purchase re-request message includes a registration indication and service identifier.

When the authentication succeeds in relation to the purchase request message or purchase re-request message, the service server 100 transmits an authentication success message to the user terminal 200 in step S309. The authentication success message uses an HTTP 200 OK response, and includes an Authentication-info header and status codes indicating statuses of the service identifiers previously transmitted. By receiving the authentication success message, the user terminal 200 is ready to receive a broadcast service from the service server 100.

The service server 100 transmits a MIKEY message to the user terminal 200 in step S311. The MIKEY message includes an MSK related to a service identifier (MBMS User Service ID) of a purchased broadcast service. The service identifier is obtained from the purchase request message in step S303 or the purchase re-request message in step S307. In the MIKEY message, the V-bit in the header is set to '1'. In response to the MIKEY message, the user terminal 200 transmits an ACK message to the service server 100.

The user terminal 200 may receive the purchased broadcast service using the received MSK. Since there is no need to occupy the wireless network, the tunnel between the service server 100 and the user terminal 200 may be released to save radio resources.

To release the tunnel, the service server 100 transmits a trigger message indicating tunnel release to the user terminal 200 in step S313. The trigger message may be transmitted through any wireless bearer, such as a short message service. As described above, the trigger message for tunnel release is a MIKEY message whose V-bit in the header is not set and has a preset value in the Key Group portion of the MSK ID.

Upon reception of the trigger message, the user terminal 200 transmits a deregistration request message to the service server 100 in step S315. The deregistration request message uses an HTTP POST message. The deregistration request message includes a deregistration indication and MBMS User Service IDs.

Upon reception of the deregistration request message, the service server 100 transmits a response message corresponding to the result of deregistration. When the deregistration fails, the service server 100 transmits an authentication fail message to the user terminal 200 in step S317. The authentication fail message utilizes an HTTP 401 response including a WWW-Authenticate header indicating an authentication failure.

Upon detection of deregistration failure (HTTP 401 response), the user terminal 200 transmits a deregistration re-request message to the service server 100 for a deregistration retry in step S319. The deregistration re-request message uses an HTTP POST Authorization request message, and includes a deregistration indication and a service identifier.

When the deregistration succeeds, the service server 100 transmits a deregistration success message including status codes to the user terminal 200 in step S321. The deregistration success message uses an HTTP 200 OK response including an Authentication-info header. The status codes indicate statuses of the service identifiers previously transmitted.

After receiving the deregistration success message, the user terminal 200 releases the tunnel to the service server 100 in step S323. While tunnel releasing terminates the connection through Interaction Network 170 to BCAST Subscription Management 140 of the service server 100, the connection through the broadcast distribution system 160 to BCAST Service Distribution/Adaptation 130 is maintained. By tunnel releasing, occupation of the wireless network is freed and radio resources are saved.

An exemplary procedure for releasing the tunnel after a service purchase request is described below.

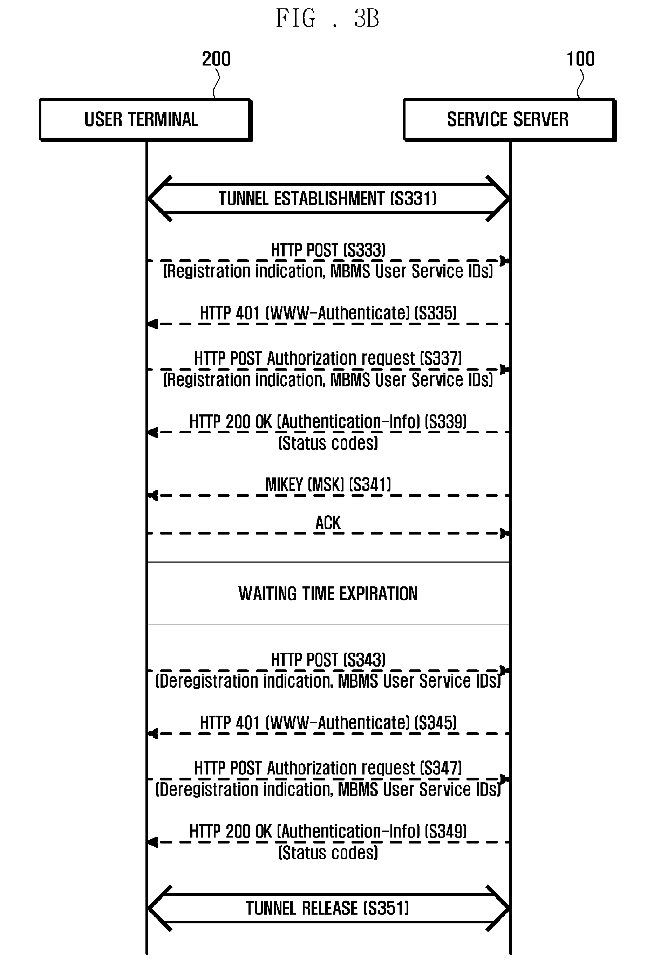

Referring to FIG. 3B, the service server 100 and the user terminal 200 are connected together through an established tunnel in step S331. To receive a broadcast service from the service server 100, the user terminal 200 transmits a purchase request message to the service server 100 in step S333.

When the authentication fails in relation to the purchase request message, the service server 100 transmits an authentication fail message (HTTP 401 response) to the user terminal 200 in step S335. Upon detection of authentication failure, the user terminal 200 transmits a purchase re-request message (HTTP POST Authorization request message) to the service server 100 for a purchase retry in step S337.

When the authentication succeeds, the service server 100 transmits an authentication success message (HTTP 200 OK response) to the user terminal 200 in step S339. The authentication success message includes an Authentication-info header and status codes indicating statuses of the service identifiers previously transmitted.

The service server 100 transmits a MIKEY message to the user terminal 200 in step S341. The MIKEY message includes an MSK related to a service identifier (MBMS User Service ID) of a purchased broadcast service. The service identifier is obtained from the purchase request message in step S333 or the purchase re-request message in step S337. In the MIKEY message, the V-bit in the header is set to '1'. In response to the MIKEY message, the user terminal 200 transmits an ACK message to the service server 100.

Now, the user terminal 200 may receive a purchased broadcast through the broadcast distribution system and reproduce the purchased broadcast using the MSK received through the wireless network. For example, the user terminal 200 may descramble a received scrambled broadcast using the MSK. Since there is no need to occupy the wireless network, the tunnel between the service server 100 and the user terminal 200 may be released to save radio resources. In an exemplary implementation, the user terminal 200 automatically releases the tunnel when a preset waiting time expires after transmitting the ACK message. The service server 100 may notify the waiting time in step S339 or broadcast an ESG including the waiting time in advance.

That is, after the expiration of the waiting time to release the tunnel, the user terminal 200 transmits a deregistration request message to the service server 100 in step S343. The deregistration request message uses an HTTP POST message, and includes a deregistration indication and MBMS User Service IDs. The deregistration indication indicates service deregistration and MBMS User Service IDs to identify broadcast services purchased by the user. MBMS User Service IDs may identify multiple broadcast services to be deregistered.

Upon reception of the deregistration request message, the service server 100 transmits a response message corresponding to the result of deregistration.

When the deregistration fails, the service server 100 transmits an authentication fail message to the user terminal 200 in step S345. The authentication fail message utilizes an HTTP 401 response including a WWW-Authenticate header indicating an authentication failure.

Upon detection of deregistration failure (HTTP 401 response), the user terminal 200 transmits a deregistration re-request message to the service server 100 for a deregistration retry in step S347. The deregistration re-request message uses an HTTP POST Authorization request message and may include a deregistration indication and a service identifier.

When the deregistration succeeds, the service server 100 transmits a deregistration success message including status codes to the user terminal 200 in step S349. The deregistration success message uses an HTTP 200 OK response including an Authentication-info header. The status codes indicate statuses of the service identifiers previously transmitted. After receiving the deregistration success message, the user terminal 200 releases the tunnel to the service server 100 to save radio resources in step S351.

An exemplary procedure for releasing the tunnel after a service request is described below.

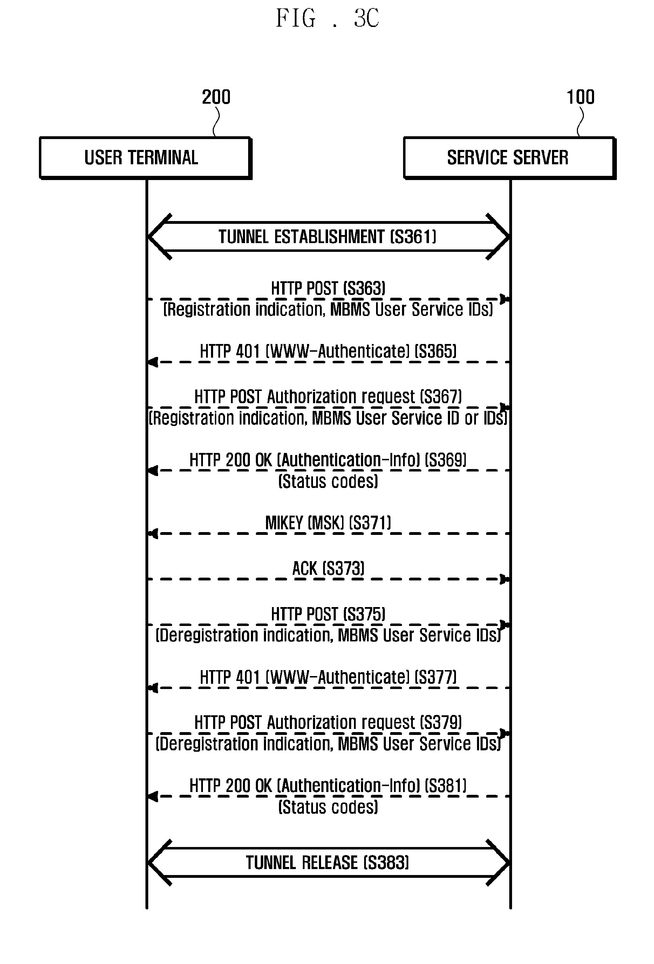

Referring to FIG. 3C, the service server 100 and the user terminal 200 are connected together through an established tunnel in step S361. To receive a broadcast service from the service server 100, the user terminal 200 transmits a purchase request message to the service server 100 in step S363.

When the authentication fails in relation to the purchase request message, the service server 100 transmits an authentication fail message (HTTP 401 response) to the user terminal 200 in step S365. Upon detection of authentication failure (HTTP 401 response), the user terminal 200 transmits a purchase re-request message (HTTP POST Authorization request message) to the service server 100 for a purchase retry in step S367.

When the authentication succeeds, the service server 100 transmits an authentication success message (HTTP 200 OK response) to the user terminal 200 in step S369. The authentication success message includes an Authentication-info header and status codes indicating statuses of the service identifiers previously transmitted.

The service server 100 transmits a MIKEY message to the user terminal 200 in step S371. The MIKEY message includes an MSK related to a service identifier (MBMS User Service ID) of a purchased broadcast service. The service identifier is obtained from the purchase request message in step S363 or the purchase re-request message in step S367. In the MIKEY message, the V-bit in the header is set to '1'. In response to the MIKEY message, the user terminal 200 transmits an ACK message indicating tunnel release to the service server 100 in step S373.

Now, the user terminal 200 may reproduce the purchased broadcast using the received MSK. Since there is no need to occupy the wireless network, the tunnel between the service server 100 and the user terminal 200 may be released to save radio resources.

To release the tunnel, the user terminal 200 transmits a deregistration request message to the service server 100 in step S375. The deregistration request message uses an HTTP POST message and includes a deregistration indication and MBMS User Service IDs. The deregistration indication indicates service deregistration and MBMS User Service IDs to identify broadcast services purchased by the user. MBMS User Service IDs may identify multiple broadcast services to be deregistered.

Upon reception of the deregistration request message, the service server 100 transmits a response message corresponding to the result of deregistration. When the deregistration fails, the service server 100 transmits an authentication fail message to the user terminal 200 in step S377. The authentication fail message utilizes an HTTP 401 response including a WWW-Authenticate header indicating an authentication failure.

Upon detection of deregistration failure (HTTP 401 response), the user terminal 200 transmits a deregistration re-request message to the service server 100 for a deregistration retry in step S379. The deregistration re-request message uses an HTTP POST Authorization request message and may include a deregistration indication and a service identifier.

When the deregistration succeeds, the service server 100 transmits a deregistration success message including status codes to the user terminal 200 in step S381. The deregistration success message uses an HTTP 200 OK response including an Authentication-info header. The status codes indicate statuses of the service identifiers previously transmitted.

After receiving the deregistration success message, the user terminal 200 releases the tunnel to the service server 100 to save radio resources in step S383.

A procedure for releasing the tunnel after an authentication key request is described below. An MSK request is related to update of an MSK or extension of the right associated with an MSK.

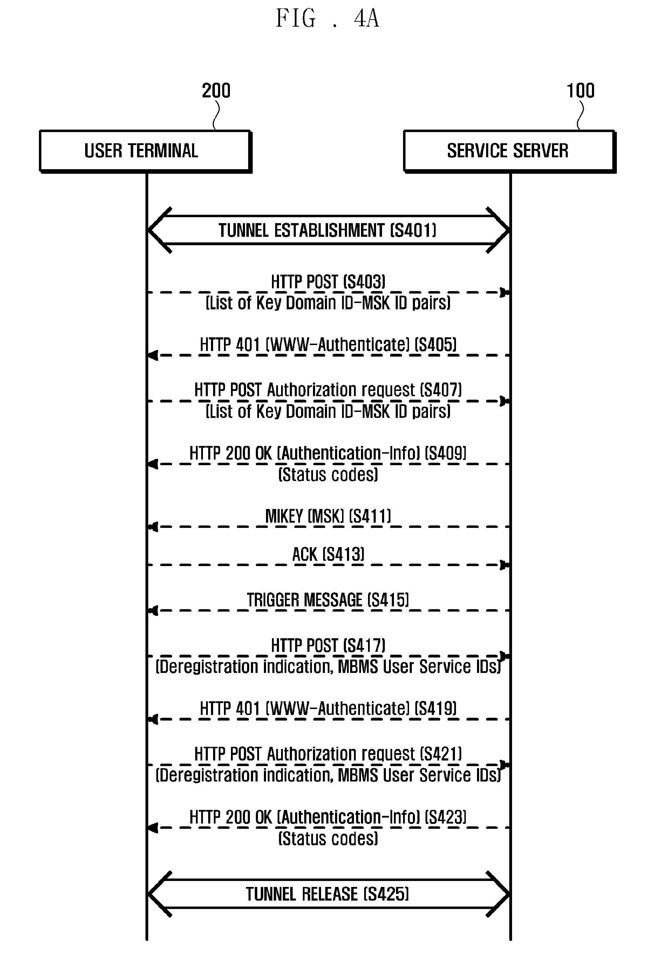

FIGs. 4A to 4C are sequence diagrams illustrating an exemplary scheme for releasing a wireless network connection. In FIGs. 4A to 4C, the user terminal 200 releases the tunnel after requesting an MSK.

Referring to FIG. 4A, the service server 100 and the user terminal 200 are connected together through an established tunnel in step S401.

To receive an MSK from the service server 100, the user terminal 200 transmits an MSK request message to the service server 100 in step S403. The MSK request message uses an HTTP POST message. That is, the user terminal 200 transmits an HTTP POST message to the service server 100 in step S403. The MSK request message includes a list of Key Domain ID - MSK ID pairs for protecting the data transmitted as part of a purchased broadcast service.

Upon reception of the MSK request message, the service server 100 transmits a response message corresponding to the result of authentication of the MSK request message. When the authentication fails, the service server 100 transmits an authentication fail message to the user terminal 200 in step S405. The authentication fail message utilizes an HTTP 401 response including a WWW-Authenticate header indicating an authentication failure.

Upon detection of the authentication failure (HTTP 401 response), the user terminal 200 transmits an MSK re-request message to the service server 100 for an MSK retry in step S407. The MSK re-request message uses an HTTP POST Authorization request message. That is, the user terminal 200 transmits an HTTP POST Authorization request message to the service server 100 at step S407. The MSK re-request message includes a list of Key Domain ID - MSK ID pairs.

When the authentication succeeds in relation to the MSK request message in step S403 or the MSK re-request message in step S407, the service server 100 transmits an authentication success message to the user terminal 200 in step S409. The authentication success message uses an HTTP 200 OK response, and includes an Authentication-info header and status codes.

The service server 100 transmits a MIKEY message to the user terminal 200 in step S411. The MIKEY message includes an MSK requested by the user terminal 200. In the MIKEY message, the V-bit in the header is set to '1'. In response to the MIKEY message, the user terminal 200 transmits an ACK message to the service server 100 in step S413.

Now, the user terminal 200 may reproduce broadcast data received through the broadcast distribution system using the received MSK. Since there is no need to occupy the wireless network, the tunnel between the service server 100 and the user terminal 200 may be released to save radio resources.

To release the tunnel, the service server 100 transmits a trigger message indicating tunnel release to the user terminal 200 in step S415. The trigger message may be transmitted through any wireless bearer, such as a short message service. As described above, the trigger message for tunnel release is a MIKEY message whose V-bit in the header is not set and has a preset value in the Key Group portion of the MSK ID.

Upon reception of the trigger message, the user terminal 200 transmits a deregistration request message to the service server 100 in step S417. The deregistration request message uses an HTTP POST message.

Upon reception of the deregistration request message, the service server 100 transmits a response message corresponding to the result of deregistration. When the deregistration fails, the service server 100 transmits an authentication fail message to the user terminal 200 in step S419. The authentication fail message utilizes an HTTP 401 response including a WWW-Authenticate header indicating an authentication failure.

Upon detection of a deregistration failure (HTTP 401 response), the user terminal 200 transmits a deregistration re-request message to the service server 100 for a deregistration retry in step S421. The deregistration re-request message uses an HTTP POST Authorization request message, and includes a deregistration indication and a service identifier.

When the deregistration succeeds, the service server 100 transmits a deregistration success message including status codes to the user terminal 200 in step S423. The deregistration success message uses an HTTP 200 OK response.

After receiving the deregistration success message, the user terminal 200 releases the tunnel to the service server 100 in step S425. While tunnel releasing terminates the connection through Interaction Network 170 to BCAST Subscription Management 140 of the service server 100, the connection through the broadcast distribution system 160 to BCAST Service Distribution/Adaptation 130 is maintained. By releasing the tunnel, occupancy of the wireless network is freed and radio resources are saved.

An exemplary procedure for releasing the tunnel after an authentication key request is described below.

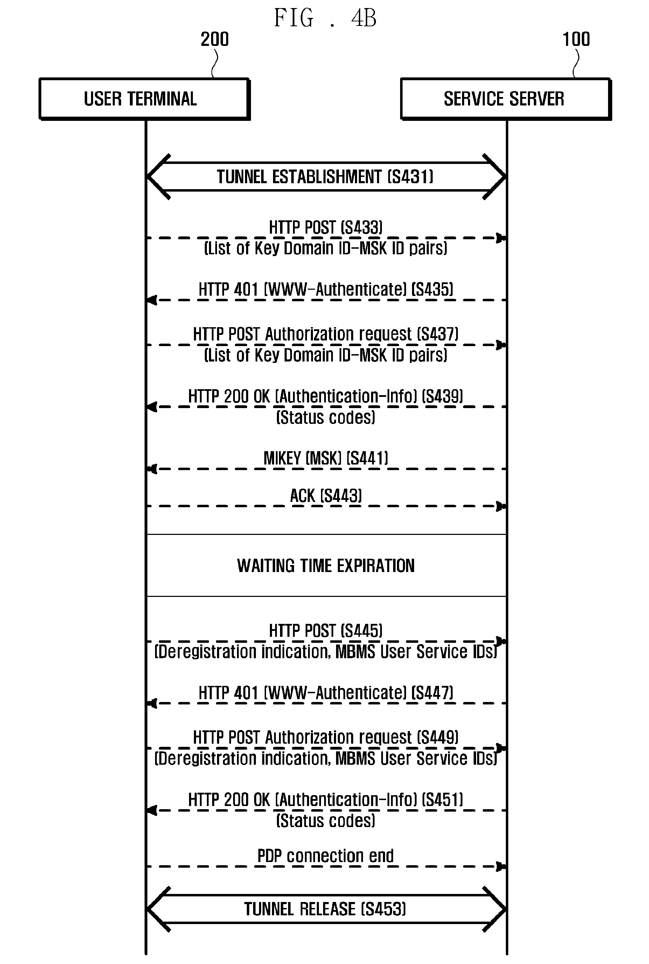

Referring to FIG. 4B, the service server 100 and the user terminal 200 are connected together through an established tunnel in step S431. To receive an MSK from the service server 100, the user terminal 200 transmits an MSK request message (HTTP POST) to the service server 100 in step S433. The MSK request message includes a list of Key Domain ID - MSK ID pairs for protecting the data transmitted as part of a purchased broadcast service.

When the authentication fails in relation to the MSK request message, the service server 100 transmits an authentication fail message (HTTP 401) to the user terminal 200 in step S435. Upon detection of authentication failure, the user terminal 200 transmits an MSK re-request message (HTTP POST Authorization request) to the service server 100 for an MSK retry in step S437.

When the authentication succeeds, the service server 100 transmits an authentication success message (HTTP 200 OK response) including status codes to the user terminal 200 in step S439.

The service server 100 transmits a MIKEY message to the user terminal 200 in step S441. The MIKEY message includes an MSK requested by the user terminal 200. The service identifier is obtained from the MSK request message in step S433 or the MSK re-request message in step S437. In the MIKEY message, the V-bit in the header is set to '1'. In response to the MIKEY message, the user terminal 200 transmits an ACK message to the service server 100 in step S443.

Now, the user terminal 200 may reproduce a purchased broadcast using the received MSK. Since there is no need to occupy the wireless network, the tunnel between the service server 100 and the user terminal 200 may be released to save radio resources. In an exemplary implementation, the user terminal 200 automatically releases the tunnel when a preset waiting time expires after transmitting the ACK message. The service server 100 may notify the waiting time in step S439 or broadcast an ESG including the waiting time in advance.

That is, after expiration of the waiting time, to release the tunnel, the user terminal 200 transmits a deregistration request message (HTTP POST message) to the service server 100 in step S445. Upon reception of the deregistration request message, the service server 100 transmits a response message corresponding to the result of deregistration.

When the deregistration fails, the service server 100 transmits an authentication fail message (HTTP 401 response) to the user terminal 200 in step S447. The authentication fail message includes a WWW-Authenticate header indicating an authentication failure.

Upon detection of deregistration failure, the user terminal 200 transmits a deregistration re-request message to the service server 100 for a deregistration retry in step S449. The deregistration re-request message uses an HTTP POST Authorization request message and may include a deregistration indication and a service identifier.

When the deregistration succeeds, the service server 100 transmits a deregistration success message (HTTP 200 OK response) including status codes to the user terminal 200 in step S451. The deregistration success message includes an Authentication-info header. After receiving the deregistration success message, the user terminal 200 releases the tunnel to the service server 100 to save radio resources in step S453.

An exemplary procedure for releasing the tunnel after an authentication key request is described below.

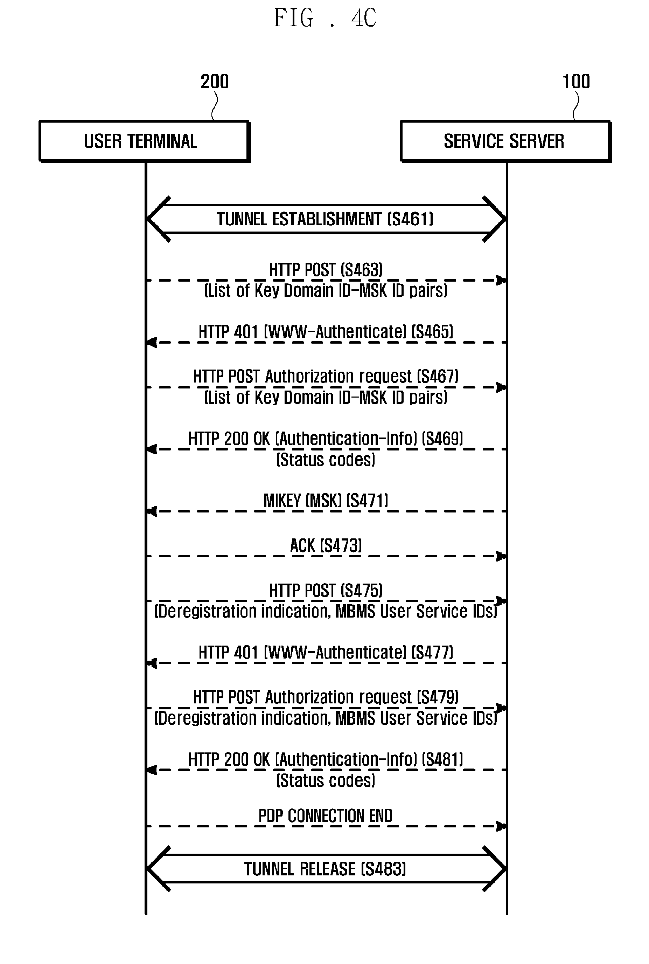

Referring to FIG. 4C, the service server 100 and the user terminal 200 are connected together through an established tunnel in step S461. To receive an MSK from the service server 100, the user terminal 200 transmits an MSK request message (HTTP POST) to the service server 100 in step S463. The MSK request message includes a list of Key Domain ID - MSK ID pairs for protecting the data transmitted as part of a purchased broadcast service.

When the authentication fails in relation to the MSK request message, the service server 100 transmits an authentication fail message (HTTP 401) to the user terminal 200 in step S465. Upon detection of authentication failure, the user terminal 200 transmits an MSK re-request message (HTTP POST Authorization request) to the service server 100 for an MSK retry in step S467.

When the authentication succeeds in relation to the MSK request message, the service server 100 transmits an authentication success message (HTTP 200 OK response) including status codes to the user terminal 200 in step S469.

The service server 100 transmits a MIKEY message to the user terminal 200 in step S471. The MIKEY message includes an MSK requested by the user terminal 200. The service identifier is obtained from the MSK request message in step S463 or the MSK re-request message in step S467. In the MIKEY message, the V-bit in the header is set to '1'. In response to the MIKEY message, the user terminal 200 transmits an ACK message indicating tunnel release to the service server 100 in step S473.

Now, the user terminal 200 may reproduce a purchased broadcast using the received MSK. Since there is no need to occupy the wireless network, the tunnel between the service server 100 and the user terminal 200 may be released to save radio resources.

That is, to release the tunnel, the user terminal 200 transmits a deregistration request message to the service server 100 in step S475. The deregistration request message uses an HTTP POST message and includes a deregistration indication and MBMS User Service IDs. The deregistration indication indicates service deregistration and MBMS User Service IDs to identify broadcast services purchased by the user. MBMS User Service IDs may identify multiple broadcast services to be deregistered.

Upon reception of the deregistration request message, the service server 100 transmits a response message corresponding to the result of deregistration.

When the deregistration fails, the service server 100 transmits an authentication fail message to the user terminal 200 in step S477. The authentication fail message utilizes an HTTP 401 response including a WWW-Authenticate header indicating an authentication failure.

Upon detection of deregistration failure (HTTP 401 response), the user terminal 200 transmits a deregistration re-request message to the service server 100 for a deregistration retry in step S479. The deregistration re-request message uses an HTTP POST Authorization request message and may include a deregistration indication and a service identifier.

When the deregistration succeeds, the service server 100 transmits a deregistration success message including status codes to the user terminal 200 in step S481. The deregistration success message uses an HTTP 200 OK response including an Authentication-info header. The status codes indicate statuses of the service identifiers previously transmitted.

After receiving the deregistration success message, the user terminal 200 releases the tunnel to the service server 100 to save radio resources in step S483.

Hereinabove, procedures are described for releasing the wireless network connection after performing interactive operations (service registration, purchase request and authentication key request) through the wireless network connection. A procedure for reestablishing a wireless network connection after releasing the wireless network connection is described below.

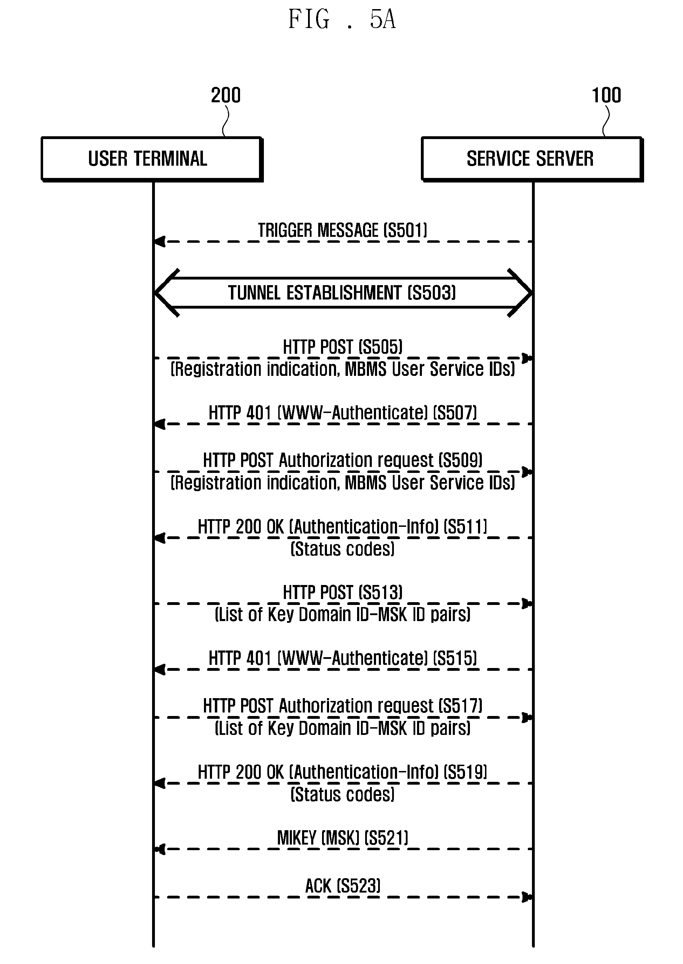

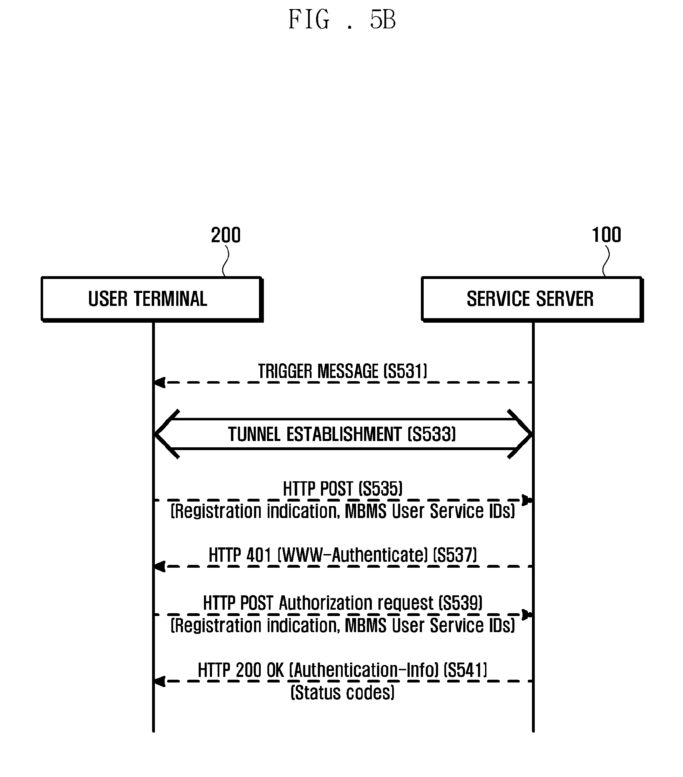

FIGs. 5A and 5B are sequence diagrams illustrating a scheme of reestablishing a wireless network connection. In FIG. 5A, the wireless network connection is related to resumption of a particular broadcast service. In FIG. 5B, the wireless network connection is related to multiple broadcast services or interactive services.

Referring to FIG. 5A, it is assumed that the service server 100 and the user terminal 200 are connected together through the broadcast distribution system (not a wireless network connection). The service server 100 transmits a trigger message to the user terminal 200 in step S501.

As described before in relation to Table 1, a trigger message for resuming a broadcast service has a preset value in the Key Group portion of the MSK ID. The preset value may be an MSK group identifier indicating a broadcast service to be resumed or an MSK group identifier indicating the current broadcast service. In the trigger message, to indicate tunnel reestablishment, the Encr Data Len field (the length of encrypted data) of KEMAC is set to '0'.

Upon reception of the trigger message, the user terminal 200 establishes a tunnel to the service server 100 in step S503.

With reference to values of the trigger message, the user terminal 200 transmits a registration request message to the service server 100 in step S505. The registration request message uses an HTTP POST message, and includes a registration indication and MBMS User Service IDs.

When the authentication fails in relation to the registration request message, the service server 100 transmits an authentication fail message to the user terminal 200 in step S507. The authentication fail message utilizes an HTTP 401 response including a WWW-Authenticate header indicating an authentication failure.

Upon detection of authentication failure (HTTP 401 response), the user terminal 200 transmits a registration re-request message to the service server 100 for a registration retry in step S509. The registration re-request message uses an HTTP POST Authorization request message, and includes a registration indication and a service identifier.

When the authentication succeeds, the service server 100 transmits an authentication success message to the user terminal 200 in step S511. The authentication success message uses an HTTP 200 OK response including an Authentication-info header and status codes indicating statuses of the service identifiers previously transmitted.

The user terminal 200 transmits an MSK request message (HTTP POST) to the service server 100 in step S513. The MSK request message includes a list of Key Domain ID - MSK ID pairs.

When the authentication fails in relation to the MSK request message, the service server 100 transmits an authentication fail message (HTTP 401) to the user terminal 200 in step S515. Upon detection of authentication failure, the user terminal 200 transmits an MSK re-request message (HTTP POST Authorization request) to the service server 100 for an MSK retry in step S517.

When the authentication succeeds in relation to the MSK request, the service server 100 transmits an authentication success message (HTTP 200 OK) to the user terminal 200 in step S519.

The service server 100 transmits a MIKEY message to the user terminal 200 in step S521. The MIKEY message includes an MSK requested by the user terminal 200. The service identifier is obtained from the MSK request message in step S513 or the MSK re-request message in step S517. In the MIKEY message, the V-bit in the header is set to '1'. In response to the MIKEY message, the user terminal 200 transmits an ACK message to the service server 100 in step S523.

In FIG. 5B, the wireless network connection is reestablished to provide multiple broadcast services or other interactive services to the user.

Referring to FIG. 5B, it is assumed that the service server 100 and the user terminal 200 are connected together through the broadcast distribution system (not a wireless network connection). The service server 100 transmits a trigger message to the user terminal 200 in step S531.

As described above in relation to Table 1, in a trigger message for multiple purchased broadcast services or other interactive services, both the Key Group portion and the Key Number portion of the MSK ID are set to '0'. In the trigger message, to indicate tunnel reestablishment, the Encr Data Len field (the length of encrypted data) of KEMAC is set to '0'.

Upon reception of the trigger message, the user terminal 200 establishes a tunnel to the service server 100 in step S533.

With reference to values of the trigger message, the user terminal 200 transmits a registration request message to the service server 100 in step S535. The registration request message uses an HTTP POST message, and includes a registration indication and MBMS User Service IDs.

When the authentication fails in relation to the registration request message, the service server 100 transmits an authentication fail message to the user terminal 200 in step S537. The authentication fail message utilizes an HTTP 401 response including a WWW-Authenticate header indicating an authentication failure.

Upon detection of the authentication failure (HTTP 401 response), the user terminal 200 transmits a registration re-request message to the service server 100 for a registration retry in step S539. The registration re-request message uses an HTTP POST Authorization request message, and includes a registration indication and a service identifier.

When the authentication succeeds, the service server 100 transmits an authentication success message including status codes to the user terminal 200 in step S541. The authentication success message uses an HTTP 200 OK response including an Authentication-info header.

While the invention has been shown and described with reference to certain exemplary embodiments thereof, it will be understood by those skilled in the art that various changes in form and details may be made therein without departing from the spirit and scope of the invention as defined in the appended claims and their equivalents.

## Claims

1. A digital broadcast service method using a user terminal and a service server, the method comprising:
establishing a connection between a user terminal and a service server through a wireless network and a broadcast distribution system;
performing, by the user terminal, service registration through the wireless network;
purchasing, by the user terminal, a broadcast service from the service server through the wireless network;
transmitting, by the user terminal, an authentication key request for the purchased broadcast service through the wireless network; and
releasing the connection made through the wireless network after one of the performing of the service registration, the purchasing of the service, and the transmitting of the authentication key request.

2. The method of claim 1, wherein the releasing of the connection made through the wireless network is performed based on a trigger message indicating wireless connection release transmitted by the service server to the user terminal.

3. The method of claim 1, wherein the releasing of the connection made through the wireless network is performed when a preset waiting time expires after one of the performing of the service registration, the purchasing of the service, and the transmitting of the authentication key request.

4. The method of claim 3, wherein the preset waiting time is included in service guide information transmitted by the service server through the broadcast distribution system to the user terminal.

5. The method of claim 3, wherein the preset waiting time is included in a message transmitted by the service server to the user terminal.

6. The method of claim 1, wherein the releasing of the connection made through the wireless network is performed when the user terminal transmits a message indicating wireless connection release to the service server after one of the performing of the service registration, the purchasing of the service, and the transmitting of the authentication key request.

7. The method of claim 1, further comprising:
transmitting, after releasing the connection made through the wireless network, by the service server, a trigger message indicating wireless connection reestablishment; and
establishing, by the user terminal, a connection to the service server through the wireless network according to the trigger message.

8. A digital broadcast service system, the system comprising:
a service server for connecting through a wireless network and a broadcast distribution system to a user terminal; and
the user terminal for one of performing service registration, purchasing a service and transmitting an authentication key request through the wireless network while maintaining the connection made through the broadcast distribution system to the service server, and for releasing the connection made through the wireless network after one of the performing of the service registration, the purchasing of the service and the transmitting of the authentication key request.

9. The system of claim 8, wherein the service server transmits a trigger message indicating wireless connection release to the user terminal.

10. The system of claim 8, wherein the user terminal releases the connection made through the wireless network when a preset waiting time expires after one of the performing of the service registration, the purchasing of the service and the transmitting of the authentication key request.

11. The system of claim 10, wherein the waiting time is included in service guide information transmitted by the service server through the broadcast distribution system to the user terminal.

12. The system of claim 10, wherein the waiting time is included in a message transmitted by the service server to the user terminal.

13. The system of claim 8, wherein the user terminal transmits a message indicating wireless connection release to the service server and releases the connection made through the wireless network, after one of the performing of the service registration, the purchasing of the service and the transmitting of the authentication key request.

14. The system of claim 8, wherein the service server transmits, after the connection made through the wireless network is released, a trigger message indicating wireless connection reestablishment.

15. The system of claim 14, wherein the user terminal establishes a connection to the service server through the wireless network according to the trigger message.
